# DEMANDE DE BREVET EUROPEEN

(11) **EP 4 556 130 A1**
(43) Date de publication de la demande: **21.05.2025**
(21) Numéro de dépôt: 24209961.2
(22) Date de dépôt: 30.10.2024
(51) Int. Cl.: B08B 3/10, B08B 3/02

(54) **MACHINE DE LAVAGE, PROCÉDÉ DE FONCTIONNEMENT DE CELLE-CI, ET LIGNE DE PRODUCTION INDUSTRIELLE COMPRENANT CELLE-CI**

(30) Priorité: 15.11.2023 FR 2312504
(71) Demandeur: Ridel, 76270 Neufchâtel-en-Bray (FR)
(72) Inventeur: RIDEL, Philippe, 76270 Neufchâtel-en-Bray (FR)
(74) Mandataire: Cabinet Chaillot

(57) **Abrégé**

L'invention concerne une machine de lavage (1) comprenant une chambre de lavage (11), un réservoir de solution lessivielle (12), une rampe de pulvérisation (11a), une pompe (13), et un plateau de récupération (11c) ; caractérisée par le fait que la machine (1) comprend en outre une conduite de chauffage (14), une pompe à chaleur (15) configurée pour chauffer la solution lessivielle, la pompe à chaleur (15) étant configurée pour récupérer de la chaleur provenant d'un air réchauffé dans la chambre de lavage (11) et pour transmettre de la chaleur à la solution lessivielle circulant dans la conduite de chauffage (14), et un dispositif de commande (16) configuré pour commander la pompe (13) et la pompe à chaleur (15).

L'invention concerne également un procédé de fonctionnement d'une machine de lavage, et une ligne de production industrielle comprenant une machine de lavage.

## Description

La présente invention concerne le domaine technique des machines de lavage, et porte plus particulièrement sur une machine de lavage, un procédé de fonctionnement de celle-ci, et une ligne de production industrielle comprenant celle-ci.

Il existe déjà dans l'art antérieur des machines de lavage configurées pour recevoir une pièce à laver, pour projeter un liquide de lavage sur la pièce à laver afin de laver celle-ci, puis pour projeter de l'air sur la pièce lavée pour sécher celle-ci. Le brevet européen EP3718652 B1 divulgue par exemple une telle machine de lavage.

Par ailleurs, dans les machines de lavage existantes, il est courant de chauffer le liquide de lavage avant de le projeter sur la pièce à laver, par exemple pour améliorer l'efficacité de lavage ou pour accélérer le séchage. La solution classique pour chauffer le liquide de lavage est d'utiliser une résistance électrique disposée dans le réservoir de stockage du liquide de lavage. Cette solution de chauffage présente cependant certains inconvénients. Elle nécessite notamment une grande quantité d'énergie.

La demande internationale WO2007/108216A1 décrit une machine de lavage selon l'état de la technique.

Par conséquent, les solutions de l'art antérieur proposées pour les machines de lavage présentent toujours des inconvénients et des améliorations sont possibles.

La présente invention vise notamment à résoudre les problèmes indiqués ci-dessus en proposant une machine de lavage comprenant une pompe à chaleur, un procédé de fonctionnement de celle-ci, et une ligne de production industrielle comprenant celle-ci.

Ainsi, la présente invention a pour objet une machine de lavage comprenant : une chambre de lavage, configurée pour recevoir une pièce à laver ; un réservoir de solution lessivielle, configuré pour contenir une solution lessivielle ; une rampe de pulvérisation, disposée dans la chambre de lavage et configurée pour pulvériser de la solution lessivielle sur la pièce à laver ; une pompe configurée pour pomper de la solution lessivielle dans le réservoir de solution lessivielle et envoyer ladite solution lessivielle jusqu'à la rampe de pulvérisation ; et un plateau de récupération placé, en utilisation, à une partie inférieure de la chambre de lavage, le plateau de récupération étant configuré pour récupérer de la solution lessivielle ayant été pulvérisée par la rampe de pulvérisation et comprenant une sortie de fluide raccordée de manière fluidique à une partie supérieure du réservoir de solution lessivielle ; caractérisée par le fait que la machine de lavage comprend en outre : une conduite de chauffage configurée pour être alimentée en solution lessivielle par la pompe et agencée pour renvoyer ladite solution lessivielle dans le réservoir de solution lessivielle ; une pompe à chaleur configurée pour chauffer la solution lessivielle, la pompe à chaleur comprenant une boucle de circulation de fluide caloporteur sur laquelle sont disposés un évaporateur et un condenseur, l'évaporateur étant configuré pour récupérer de la chaleur provenant d'un air réchauffé dans la chambre de lavage et pour transférer de la chaleur récupérée au fluide caloporteur de la boucle de circulation de fluide caloporteur, et le condenseur étant configuré pour transmettre de la chaleur du fluide caloporteur de la boucle de circulation de fluide caloporteur à la solution lessivielle circulant dans la conduite de chauffage, pour chauffer ladite solution lessivielle ; et un dispositif de commande configuré pour commander la pompe et la pompe à chaleur.

Au sens de l'invention, on entend par « air » de l'air contenant éventuellement de la vapeur de solution lessivielle, la vapeur de solution lessivielle contenant de la chaleur latente disponible. On comprendra qu'une machine selon l'invention est configurée pour récupérer de la chaleur provenant de l'air y compris de la chaleur latente provenant de la vapeur de solution lessivielle.

Cette configuration permet notamment d'obtenir une machine de lavage fournissant un chauffage efficace de la solution lessivielle en utilisant la pompe à chaleur pour chauffer la solution lessivielle en fonctionnement mais également dès la phase d'amorçage de la machine. En variante, une machine de lavage selon l'invention peut être configurée pour recevoir simultanément plusieurs pièces à laver dans la chambre de lavage. On comprendra aussi que l'aspiration de solution lessivielle par la pompe pour un envoi dans la conduite de chauffage puis un retour dans le réservoir de solution lessivielle permet une mise en circulation de la solution lessivielle dans le réservoir de solution lessivielle, ce qui permet notamment d'homogénéiser rapidement la température de la solution lessivielle dans le réservoir de solution lessivielle.

Le dispositif de commande peut notamment être un dispositif électronique, par exemple un processeur, un microprocesseur, un microcontrôleur, un processeur de signaux numériques (DSP), une matrice prédiffusée programmable (FPGA), un circuit intégré à application spécifique (ASIC), comprenant ou associé à de la mémoire qui contient des instructions pour commander la machine. Le dispositif de commande peut également comporter des entrées/sorties voire des dispositifs de communication, sans fil ou filaire.

Selon un mode de réalisation particulier, la machine comprend en outre une boucle de circulation de fluide caloporteur additionnelle, un échangeur de chaleur et au moins l'un parmi une canalisation configurée pour raccorder de manière fluidique l'échangeur de chaleur à un intérieur de la chambre de lavage, et un volume libre agencé dans le réservoir de solution lessivielle, au-dessus de la solution lessivielle, configuré pour recevoir de l'air provenant de la chambre de lavage, l'échangeur de chaleur est configuré pour aspirer de l'air depuis l'au moins un parmi ladite canalisation et ledit volume libre, pour récupérer de la chaleur à partir dudit air aspiré et pour transférer de la chaleur récupérée au fluide caloporteur de la boucle de circulation de fluide caloporteur additionnelle, la boucle de circulation de fluide caloporteur additionnelle étant agencée, au niveau de la pompe à chaleur, pour transférer de la chaleur du fluide caloporteur de la boucle de circulation de fluide caloporteur additionnelle à l'évaporateur de la pompe à chaleur.

Cette configuration permet une récupération indirecte de chaleur provenant d'un air réchauffé dans la chambre de lavage, par l'intermédiaire de l'échangeur de chaleur et de la boucle de circulation de fluide caloporteur additionnelle. Cette configuration permet notamment l'utilisation d'une pompe à chaleur de type eau-eau.

Selon un mode de réalisation particulier, la machine comprend en outre au moins l'un parmi une canalisation configurée pour raccorder de manière fluidique l'évaporateur de la pompe à chaleur à un intérieur de la chambre de lavage, et un volume libre agencé dans le réservoir de solution lessivielle, au-dessus de la solution lessivielle, configuré pour recevoir de l'air provenant de la chambre de lavage, et la pompe à chaleur est une pompe à chaleur de type air-eau et comprend un premier ventilateur configuré pour aspirer de l'air depuis l'au moins un parmi ladite canalisation et ledit volume libre, et pour faire circuler ledit air aspiré au contact de l'évaporateur pour récupérer de la chaleur à partir dudit air aspiré.

Cette configuration permet une récupération directe de chaleur provenant d'un air réchauffé dans la chambre de lavage par l'intermédiaire de la pompe à chaleur de type air-eau, et a notamment une structure simple.

Selon un mode de réalisation particulier, la pompe à chaleur, le cas échéant l'échangeur de chaleur, comprend en outre une conduite de drainage configurée pour récupérer de la vapeur de solution lessivielle contenue dans l'air aspiré et se condensant au niveau de l'évaporateur lors du passage de l'air aspiré au contact de l'évaporateur, le cas échéant au niveau de l'échangeur de chaleur lors du passage de l'air aspiré au contact de l'échangeur de chaleur, et évacuer la vapeur condensée récupérée vers le réservoir de solution lessivielle.

Cette configuration permet de récupérer de la solution lessivielle et donc de diminuer la consommation en solution lessivielle de la machine.

Selon un mode de réalisation particulier, le premier ventilateur, le cas échéant l'échangeur de chaleur, est en outre configuré pour aspirer de manière sélective de l'air depuis un environnement immédiat de la machine de lavage, de manière à récupérer de la chaleur à partir dudit air aspiré.

Cette configuration permet notamment de pouvoir aspirer de manière sélective de l'air provenant de la chambre de lavage ou de l'air provenant de l'environnement immédiat de la machine, ou de mélanger de l'air provenant de la chambre de lavage et de l'air provenant de l'environnement immédiat de la machine, par exemple pour contrôler la température dudit mélange d'air. On comprendra aussi que cette configuration permet d'aspirer facilement et rapidement une grande quantité d'air, ce qui est avantageux pour chauffer la solution lessivielle avec la pompe à chaleur lors d'une phase d'amorçage, c'est-à-dire une phase au cours de laquelle la pompe à chaleur est utilisée pour chauffer la solution lessivielle à partir d'une température ambiante, par exemple de 20 °C, jusqu'à une température d'utilisation, par exemple de 60 °C. On comprendra également qu'en variante la machine peut être configurée pour ouvrir la chambre de lavage lors de la phase d'amorçage, de manière à permettre une aspiration d'air de l'environnement immédiat de la machine de lavage par la chambre de lavage, ou que la chambre de lavage peut comprendre un clapet configuré pour s'ouvrir automatiquement lorsqu'une pression baisse dans la chambre de lavage, de manière à laisser entrer de l'air depuis l'environnement immédiat de la machine de lavage.

Selon un mode de réalisation particulier, la machine comprend en outre un filtre en treillage, servant de dévésiculeur, disposé en amont de l'évaporateur, le cas échéant en amont de l'échangeur de chaleur, le filtre en treillage étant en outre configuré pour linéariser le débit de l'air aspiré le traversant.

On comprendra que cette solution technique permet de récupérer de la solution lessivielle et donc de diminuer la consommation en solution lessivielle de la machine, mais aussi de diminuer une quantité de vapeur, contenue dans l'air aspiré, libérée dans l'environnement immédiat de la machine.

Selon un mode de réalisation particulier, la machine comprend un réservoir tampon, servant de détente, disposé en amont du filtre en treillage et configuré pour récupérer des gouttelettes de solution lessivielle et linéariser le débit de l'air aspiré le traversant.

On comprendra que cette solution technique permet de récupérer de la solution lessivielle, et donc de diminuer la consommation en solution lessivielle de la machine, mais aussi de diminuer une quantité de vapeur, contenue dans l'air aspiré, libérée dans l'environnement immédiat de la machine.

Selon un mode de réalisation particulier, le plateau de récupération est mobile et la machine comprend en outre un système mécanique configuré pour déplacer verticalement le plateau de récupération de manière à ouvrir et fermer hermétiquement la chambre de lavage.

On comprendra que cette configuration permet notamment de facilement charger et décharger une ou plusieurs pièces dans la chambre de lavage.

Selon un mode de réalisation particulier, pour assurer un fonctionnement dégradé, le réservoir de solution lessivielle comprend un moyen de chauffage auxiliaire de la solution lessivielle, de préférence une résistance électrique.

De préférence, le moyen de chauffage auxiliaire est prévu pour améliorer la fiabilité d'utilisation de la machine de lavage mais n'est pas destiné à être utilisé. En variante la machine de lavage peut utiliser le moyen de chauffage auxiliaire, en combinaison ou en remplacement de la pompe à chaleur, pour chauffer la solution lessivielle lors d'une phase d'amorçage de la machine.

Selon un mode de réalisation particulier, la machine comprend en outre une vanne de commande d'alimentation en solution lessivielle disposée entre la pompe et la rampe de pulvérisation, et un système d'alimentation en fluide de soufflage raccordé de manière fluidique à la rampe de pulvérisation par l'intermédiaire d'une vanne de commande d'alimentation en fluide de soufflage, la rampe de pulvérisation étant en outre configurée pour pulvériser alternativement de la solution lessivielle et du fluide de soufflage en étant alternativement reliée au réservoir de solution lessivielle et au système d'alimentation en fluide de soufflage, et le dispositif de commande étant configuré pour commander les vannes de commande d'alimentation pour commander l'alimentation de la rampe de pulvérisation en solution lessivielle et en fluide de soufflage.

On comprendra qu'une machine de lavage selon ce mode de réalisation est, de préférence, configurée pour permettre un séchage de la pièce par pulvérisation de fluide de soufflage par la rampe de pulvérisation.

Selon un mode de réalisation particulier, la pompe à chaleur comprend en outre un condenseur à air disposé sur la boucle de circulation de fluide caloporteur, entre le condenseur et l'évaporateur et en amont d'un détendeur de la boucle de circulation de fluide caloporteur, et un second ventilateur configuré pour aspirer au moins l'un parmi de l'air sortant de l'évaporateur et de l'air provenant d'un environnement immédiat de la machine de lavage et pour faire circuler ledit air aspiré au contact du condenseur à air.

On comprendra que le condenseur à air permet de refroidir le fluide caloporteur de la boucle de circulation de fluide caloporteur. On comprendra donc que, si la température de la solution lessivielle est trop élevée, une commande du second ventilateur par le dispositif de commande permet de limiter le chauffage de la solution lessivielle par la pompe à chaleur.

La présente invention a aussi pour objet un procédé de fonctionnement d'une machine selon un mode de réalisation particulier de l'invention, caractérisé par le fait que le procédé comprend les étapes consistant à : a) actionner la pompe pour faire circuler de la solution lessivielle dans la conduite de chauffage, actionner le premier ventilateur de la pompe à chaleur à une première vitesse pour aspirer de l'air depuis un environnement immédiat de la machine de lavage et faire circuler ledit air au contact de l'évaporateur, mesurer une température de la solution lessivielle à l'aide d'un capteur de température dans le réservoir de solution lessivielle, et actionner la pompe à chaleur pour chauffer la solution lessivielle jusqu'à une première température cible, de manière à amorcer la machine de lavage ; b) actionner la pompe pour alimenter la rampe de pulvérisation en solution lessivielle et pour faire circuler de la solution lessivielle dans la conduite de chauffage, actionner la pompe à chaleur pour chauffer la solution lessivielle, actionner le premier ventilateur à une seconde vitesse, inférieure ou égale à la première vitesse, pour aspirer de l'air depuis l'environnement immédiat de la machine de lavage et faire circuler ledit air au contact de l'évaporateur, et actionner le second ventilateur pour aspirer à la fois de l'air sortant de l'évaporateur et de l'air provenant de l'environnement immédiat de la machine de lavage et faire circuler ledit air au contact du condenseur à air ; c) actionner la pompe pour faire circuler de la solution lessivielle dans la conduite de chauffage, arrêter l'alimentation de la rampe de pulvérisation en solution lessivielle, actionner le système d'alimentation en fluide de soufflage pour alimenter la rampe de pulvérisation en fluide de soufflage, actionner la pompe à chaleur pour chauffer la solution lessivielle, actionner le premier ventilateur à la seconde vitesse pour aspirer de l'air provenant de la chambre de lavage et faire circuler ledit air au contact de l'évaporateur, et actionner le second ventilateur pour aspirer à la fois de l'air sortant de l'évaporateur et de l'air provenant de l'environnement immédiat de la machine de lavage et faire circuler ledit air au contact du condenseur à air ; d) mesurer la température de la solution lessivielle à l'aide du capteur de température dans le réservoir de solution lessivielle ; et e) si la température de la solution lessivielle est supérieure à une seconde température cible, augmenter une vitesse de fonctionnement du second ventilateur, la seconde température cible étant supérieure ou égale à la première température cible.

On comprendra que le dispositif de commande est configuré pour commander la machine de manière à exécuter le procédé. On comprendra également que l'étape a) correspond à une étape d'amorçage de la machine de lavage, que l'étape b) correspond à une étape de lavage d'une pièce, que l'étape c) correspond à une étape de séchage de la pièce, et que les étapes d) et e) correspondent à des étapes de surveillance et d'ajustement de température. On comprendra donc que, pour un fonctionnement en série, l'étape a) peut être réalisée une seule fois et qu'une pluralité de pièces peuvent être successivement introduites dans la machine de lavage, les étapes b) à e) étant réalisées pour chaque pièce (éventuellement chaque groupe de pièces) introduite dans la machine. On comprendra aussi que selon une variante non préférée, l'étape d'amorçage peut utiliser le moyen de chauffage auxiliaire, en combinaison ou en remplacement de la pompe à chaleur, pour chauffer la solution lessivielle jusqu'à la première température cible.

La présente invention a également pour objet une ligne de production industrielle, caractérisée par le fait que la ligne de production industrielle comprend au moins une machine de lavage selon l'invention configurée pour recevoir séquentiellement, avec des cycles de lavage inférieurs à 5 minutes, une pluralité de pièces à laver et au moins un dispositif de transport configuré pour transporter la pluralité de pièces à laver et introduire séquentiellement la pluralité de pièces à laver dans l'au moins une machine de lavage.

Des modes de réalisation particuliers de la présente invention vont maintenant être décrits, avec référence aux dessins annexés.

Sur ces dessins :
[Fig. 1] est une représentation schématique d'une machine de lavage selon une premier mode de réalisation de la présente invention.
[Fig. 2] est une représentation schématique agrandie de la pompe à chaleur de la machine de lavage de la Figure 1.
[Fig. 3] est une représentation schématique d'une machine de lavage selon un deuxième mode de réalisation de la présente invention.

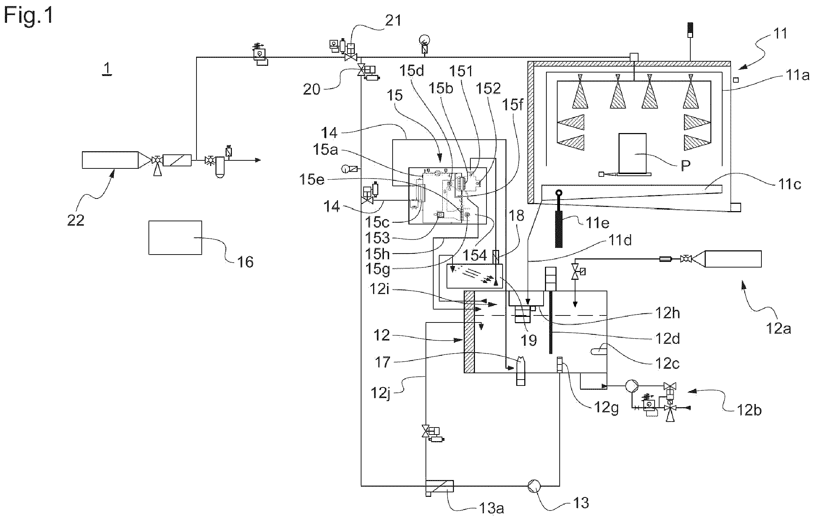

Si l'on se réfère tout d'abord à la Figure 1, on peut voir que l'on y a représenté une machine de lavage 1 selon une premier mode de réalisation de la présente invention, comprenant une chambre de lavage 11, un réservoir de solution lessivielle 12, une rampe de pulvérisation 11a, une pompe 13, un plateau de récupération 11c, une conduite de chauffage 14, une pompe à chaleur 15, et un dispositif de commande 16.

La chambre de lavage 11 est configurée pour recevoir une pièce P à laver, par exemple une pièce P venant d'être usinée. On comprendra qu'en variante une machine de lavage 1 selon l'invention peut être configurée pour recevoir simultanément plusieurs pièces P à laver dans la chambre de lavage 11.

Le réservoir de solution lessivielle 12 est configuré pour contenir une solution lessivielle destinée à laver la pièce P à laver. La solution lessivielle peut par exemple être de l'eau, une solution de lavage à base d'eau, ou une solution détergente, voire à base d'huile. Dans le cas où la pièce P à laver est une pièce P venant d'être usinée, on comprendra que la solution lessivielle est, de préférence, choisie pour permettre un retrait d'un liquide de lubrification, utilisé lors de l'usinage de la pièce P à laver, de la surface de la pièce P.

La machine de lavage 1 comprend en outre une source d'alimentation en solution lessivielle 12a configurée pour alimenter le réservoir de solution lessivielle 12 en solution lessivielle et, de préférence, un système d'évacuation 12b configuré pour retirer de la solution lessivielle du réservoir de solution lessivielle 12. On comprendra que la source d'alimentation en solution lessivielle 12a et le système d'évacuation 12b sont configurés pour ajuster le niveau de solution lessivielle dans le réservoir de solution lessivielle 12, et que le système d'évacuation 12b est en outre configuré pour permettre, si besoin, de vider totalement le réservoir de solution lessivielle 12, par exemple pour nettoyer le réservoir de solution lessivielle 12. On comprendra également que la source d'alimentation en solution lessivielle 12a peut, par exemple, comprendre une conduite d'alimentation raccordée à une ligne d'alimentation en eau d'un bâtiment, et éventuellement un dispositif de mélange d'additifs configuré pour ajouter des additifs à l'eau pour former la solution lessivielle. En variante, la source d'alimentation en solution lessivielle 12a peut être une ouverture configurée pour alimenter le réservoir de solution lessivielle 12 à partir d'un ou plusieurs contenants externes, par exemple à partir de bouteilles de solution de lavage ou de solution détergente.

Dans le mode de réalisation représenté sur la Figure 1, le réservoir de solution lessivielle 12 comprend un capteur de température 12c configuré pour mesurer une température de la solution lessivielle et une sonde de niveau de liquide 12d configurée pour mesurer un niveau de la solution lessivielle.

La rampe de pulvérisation 11a est disposée dans la chambre de lavage 11 et est configurée pour pulvériser de la solution lessivielle sur la pièce P à laver.

La pompe 13 est raccordée de manière fluidique à la rampe de pulvérisation 11a et est configurée pour pomper de la solution lessivielle dans le réservoir de solution lessivielle 12 et envoyer ladite solution lessivielle jusqu'à la rampe de pulvérisation 11a. Dans le mode de réalisation représenté sur la Figure 1, la pompe 13 est configurée pour pomper la solution lessivielle depuis une partie inférieure du réservoir de solution lessivielle 12 à travers une crépine 12g configurée pour filtrer d'éventuelles impuretés présentes dans le réservoir de solution lessivielle 12. Selon le mode de réalisation représenté sur la Figure 1, la machine de lavage 1 comprend en outre un filtre 13a disposé en sortie de la pompe 13.

Le plateau de récupération 11c est placé, en utilisation, à une partie inférieure de la chambre de lavage 11 et est configuré pour récupérer de la solution lessivielle ayant été pulvérisée par la rampe de pulvérisation 11a. Le plateau de récupération 11c comprend une sortie de fluide 11d raccordée de manière fluidique à une partie supérieure du réservoir de solution lessivielle 12. Selon le mode de réalisation représenté sur la Figure 1, la partie supérieure du réservoir de solution lessivielle 12 comprend un filtre d'entrée 12h configuré pour filtrer la solution lessivielle et l'air provenant de la chambre de lavage 11 lors d'une entrée dans le réservoir de solution lessivielle 12. Le filtre d'entrée 12h peut, par exemple, être un panier à copeaux configuré pour récupérer des copeaux formés lors d'un usinage de la pièce P à laver.

Dans le mode de réalisation représenté sur la Figure 1, le plateau de récupération 11c est mobile et la machine 1 comprend en outre un système mécanique 11e, par exemple un actionneur électrique, par exemple un vérin électrique, configuré pour déplacer verticalement le plateau de récupération 11c de manière à ouvrir et fermer hermétiquement la chambre de lavage 11. On comprendra cependant qu'en variante, le plateau de récupération 11c pourrait être fixe et que la chambre de lavage 11 pourrait comprendre un autre moyen pour introduire une pièce P, par exemple une porte formée dans une paroi latérale de la chambre de lavage 11.

La conduite de chauffage 14 est configurée pour être alimentée en solution lessivielle par la pompe 13 et est agencée pour renvoyer ladite solution lessivielle dans le réservoir de solution lessivielle 12, de préférence en partie inférieure du réservoir de solution lessivielle 12 pour favoriser l'homogénéisation de la température dans le réservoir de solution lessivielle 12. Selon le mode de réalisation représenté sur la Figure 1, la conduite de chauffage 14 est ramifiée depuis une conduite reliant la pompe 13 à la rampe de pulvérisation 11a, on comprendra cependant qu'en variante la conduite de chauffage 14 peut être une conduite dédiée. On comprendra aussi qu'en variante, la pompe 13 peut comprendre une première unité de pompage configurée pour envoyer de la solution lessivielle vers la rampe de pulvérisation 11a et une seconde unité de pompage configurée pour envoyer de la solution lessivielle vers la conduite de chauffage 14.

Toujours selon le mode de réalisation représenté sur la Figure 1, la machine de lavage 1 comprend en outre une conduite de retour 12j configurée pour directement renvoyer de la solution lessivielle dans le réservoir de solution lessivielle 12 lorsque l'alimentation en solution lessivielle de la rampe de pulvérisation 11a est arrêtée. On comprendra qu'en variante la machine 1 peut être exempte de conduite de retour 12j, la solution lessivielle en excès étant alors renvoyée vers le réservoir de solution lessivielle 12 par la conduite de chauffage 14.

La pompe à chaleur 15 est configurée pour chauffer la solution lessivielle utilisée par la machine de lavage 1 lors de toutes les phases d'utilisation de la machine 1. On comprendra cependant que, par exemple pour améliorer la fiabilité d'utilisation de la machine de lavage 1, les moyens de chauffage de la machine 1 peuvent être doublés. En particulier, le réservoir de solution lessivielle 12 peut en outre comprend un moyen de chauffage auxiliaire 17 de la solution lessivielle, le moyen de chauffage auxiliaire 17 peut avantageusement être une résistance électrique.

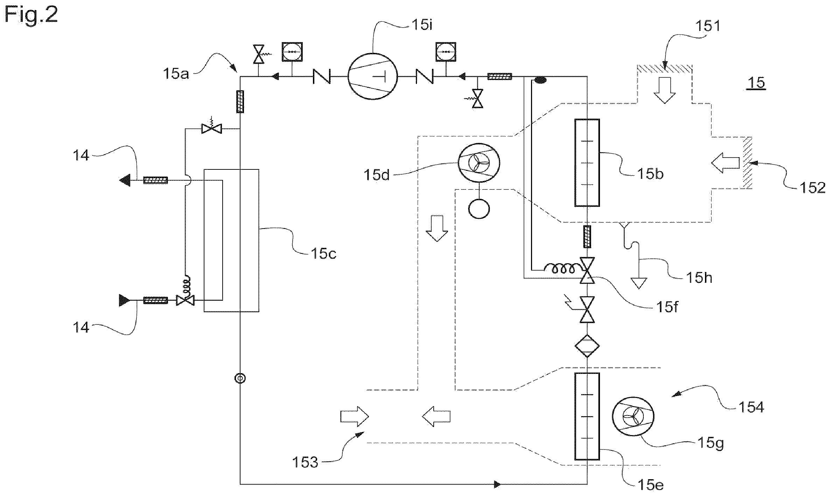

En se référant également à la Figure 2, on peut voir que la pompe à chaleur 15 comprend une boucle de circulation de fluide caloporteur 15a sur laquelle sont disposés un évaporateur 15b et un condenseur 15c.

Comme cela sera décrit plus en détail ci-après, l'évaporateur 15b est configuré pour récupérer, directement ou indirectement, de la chaleur provenant d'un air réchauffé dans la chambre de lavage 11 et pour transférer de la chaleur récupérée au fluide caloporteur de la boucle de circulation de fluide caloporteur 15a, et le condenseur 15c est configuré pour transmettre de la chaleur du fluide caloporteur de la boucle de circulation de fluide caloporteur 15a à la solution lessivielle circulant dans la conduite de chauffage 14, pour chauffer ladite solution lessivielle.

Au sens de l'invention, on entend par « air » de l'air contenant éventuellement de la vapeur de solution lessivielle, la vapeur de solution lessivielle contenant de la chaleur latente disponible. On comprendra qu'une machine 1 selon l'invention est configurée pour récupérer de la chaleur provenant de l'air y compris de la chaleur latente provenant de la vapeur de solution lessivielle.

On comprendra aussi que l'aspiration de solution lessivielle par la pompe 13 pour un envoi dans la conduite de chauffage 14 puis un retour dans le réservoir de solution lessivielle 12 permet une mise en circulation de la solution lessivielle dans le réservoir de solution lessivielle 12, ce qui permet notamment d'homogénéiser rapidement la température de la solution lessivielle dans le réservoir de solution lessivielle 12.

Le dispositif de commande 16 est configuré pour commander la pompe 13 et la pompe à chaleur 15.

Le dispositif de commande 16 peut notamment être un dispositif électronique, par exemple un processeur, un microprocesseur, un microcontrôleur, un processeur de signaux numériques (DSP), une matrice prédiffusée programmable (FPGA), un circuit intégré à application spécifique (ASIC), comprenant ou associé à de la mémoire qui contient des instructions pour commander la machine 1. Le dispositif de commande 16 peut également comporter des entrées/sorties voire des dispositifs de communication, sans fil ou filaire.

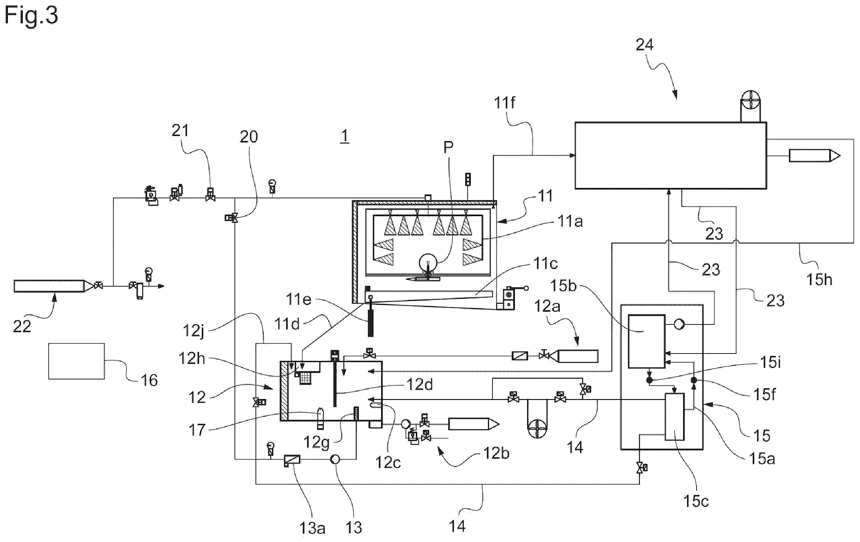

Dans le premier mode de réalisation représenté sur les Figures 1 et 2, l'évaporateur 15b est configuré pour récupérer directement de la chaleur provenant d'un air réchauffé dans la chambre de lavage 11, tandis que dans le deuxième mode de réalisation représenté sur la Figure 3, l'évaporateur 15b est configuré pour récupérer indirectement de la chaleur provenant d'un air réchauffé dans la chambre de lavage 11.

Dans le premier mode de réalisation représenté sur les Figures 1 et 2, la machine 1 comprend en outre un volume libre 12i, agencé dans le réservoir de solution lessivielle 12 au-dessus de la solution lessivielle, configuré pour recevoir de l'air provenant de la chambre de lavage 11. On comprendra qu'en utilisation, de l'air présent dans la chambre de lavage 11 passe par la sortie de fluide 11d du plateau de récupération 11c et arrive dans le volume libre 12i. Par ailleurs, la pompe à chaleur 15 est une pompe à chaleur 15 de type air-eau et comprend un premier ventilateur 15d configuré pour aspirer, par une première entrée d'air 151 de la pompe à chaleur 15, de l'air depuis le volume libre 12i, et pour faire circuler ledit air aspiré au contact de l'évaporateur 15b pour récupérer de la chaleur à partir dudit air aspiré. On comprendra qu'en utilisation, l'air se réchauffe dans la chambre de lavage 11, la chambre de lavage 11 étant réchauffée par la solution lessivielle.

On comprendra aussi que, selon des variantes, la machine 1 peut comprendre, en remplacement ou en complément du volume libre 12i, une canalisation configurée pour raccorder de manière fluidique l'évaporateur 15b de la pompe à chaleur 15 à un intérieur de la chambre de lavage 11, par l'intermédiaire de la première entrée d'air 151 de la pompe à chaleur 15. On comprendra que le premier ventilateur 15d de la pompe à chaleur 15 est alors configuré pour aspirer de l'air depuis ladite canalisation par la première entrée d'air 151, en remplacement ou en complément de l'aspiration depuis le volume libre 12i décrite ci-avant. Par exemple, ladite canalisation pourrait être raccordée à la chambre de lavage 11 d'une manière analogue à la canalisation 11f du deuxième mode de réalisation qui sera décrit plus en détail ci-après.

Dans le mode de réalisation représenté sur la Figure 1, le premier ventilateur 15d est en outre configuré pour aspirer de manière sélective de l'air depuis un environnement immédiat de la machine de lavage 1, par l'intermédiaire d'une deuxième entrée d'air 152, de manière à récupérer de la chaleur à partir dudit air aspiré. On comprendra que la pompe à chaleur 15 peut, par exemple, comprendre un clapet configuré pour ouvrir et fermer la deuxième entrée d'air 152 de manière sélective, par exemple un clapet commandé, directement ou indirectement, par le dispositif de commande. On comprendra aussi que le dispositif de commande 16 de la machine 1 est configuré pour commander la pompe à chaleur 15 de manière à aspirer l'air de manière sélective à partir de la première entrée d'air 151 et à partir de la deuxième entrée d'air 152. On comprendra également que cela permet notamment de pouvoir aspirer de l'air depuis l'une ou l'autre des entrées d'air 151, 152, ou de mélanger de l'air entrant par la première entrée d'air 151 à de l'air entrant par la deuxième entrée d'air 152, par exemple pour contrôler la température dudit mélange d'air. On comprendra aussi que cette configuration permet d'aspirer, par la deuxième entrée d'air 152, facilement et rapidement, une grande quantité d'air, ce qui est avantageux pour chauffer la solution lessivielle avec la pompe à chaleur 15 lors d'une phase d'amorçage, c'est-à-dire une phase au cours de laquelle la pompe à chaleur 15 est utilisée pour chauffer la solution lessivielle à partir d'une température ambiante, par exemple de 20 °C, jusqu'à une température d'utilisation, par exemple de 60 °C. On comprendra également qu'en variante, la machine 1 peut être configurée pour ouvrir la chambre de lavage 11 lors de la phase d'amorçage, de manière à permettre une aspiration d'air de l'environnement immédiat de la machine de lavage 1 par la chambre de lavage 11, ou que la chambre de lavage 11 peut comprendre un clapet configuré pour s'ouvrir automatiquement lorsqu'une pression baisse dans la chambre de lavage 11, de manière à laisser entrer de l'air depuis l'environnement immédiat de la machine de lavage 1.

Si l'on se réfère à la Figure 2, on peut voir que dans le premier mode de réalisation, la pompe à chaleur 15 comprend en outre un condenseur à air 15e disposé sur la boucle de circulation de fluide caloporteur 15a, entre le condenseur 15c et l'évaporateur 15b et en amont d'un détendeur 15f de la boucle de circulation de fluide caloporteur 15a. On comprendra que le détendeur 15f est disposé sur la boucle de circulation de fluide caloporteur 15a entre le condenseur 15c et l'évaporateur 15b, et que la pompe à chaleur 15 comprend également un compresseur 15i disposé sur la boucle de circulation de fluide caloporteur 15a entre l'évaporateur 15b et le condenseur 15c. La pompe à chaleur 15 comprend en outre un second ventilateur 15g configuré pour aspirer de l'air sortant de l'évaporateur 15b et de l'air provenant de l'environnement immédiat de la machine de lavage 1, par l'intermédiaire d'une entrée/sortie d'air 153, et pour faire circuler ledit air aspiré au contact du condenseur à air 15e avant une évacuation de la pompe à chaleur 15 par une sortie d'air 154. On comprendra que, lorsque le second ventilateur 15g n'est pas actionné, l'air sortant de l'évaporateur 15b sort par l'entrée/sortie 153 de la pompe à chaleur 15, en raison des pertes de charges induites par le condenseur à air 15e disposé devant la sortie d'air 154.

On comprendra aussi que le condenseur à air 15e permet de refroidir le fluide caloporteur de la boucle de circulation de fluide caloporteur. On comprendra donc que si la température de la solution lessivielle mesurée à l'aide du capteur de température 12c est supérieure à une valeur souhaitée, le dispositif de commande 16 est configuré pour augmenter la vitesse de fonctionnement du second ventilateur 15g de manière à limiter le chauffage, de la solution lessivielle par la pompe à chaleur 15.

L'aspiration, à la fois, d'air sortant de l'évaporateur 15b et d'air provenant de l'environnement immédiat de la machine de lavage 1 à l'aide du second ventilateur 15g permet de mélanger de l'air qui a été refroidi au contact de l'évaporateur 15b à de l'air provenant de l'environnement immédiat de la machine de lavage 1 et de réchauffer ce mélange, en refroidissant le condenseur à air 15e, afin de ne pas créer de trace de brouillard à la sortie d'air 154 de la pompe à chaleur 15. On comprendra cependant que selon des variantes, le second ventilateur 15g peut être configuré pour aspirer uniquement de l'air sortant de l'évaporateur 15b ou uniquement de l'air provenant de l'environnement immédiat de la machine de lavage 1.

Dans le mode de réalisation représenté sur la Figure 1, la pompe à chaleur 15 comprend en outre une conduite de drainage 15h configurée pour récupérer de la vapeur de solution lessivielle contenue dans l'air aspiré et se condensant au niveau de l'évaporateur 15b lors du passage de l'air aspiré au contact de l'évaporateur 15b, et pour évacuer la vapeur condensée récupérée vers le réservoir de solution lessivielle 12.

Selon le mode de réalisation représenté sur la Figure 1, la machine 1 comprend en outre un filtre en treillage 18, servant de dévésiculeur, disposé en amont de l'évaporateur 15b. Le filtre en treillage 18 est en outre configuré pour linéariser le débit de l'air aspiré le traversant. Le filtre en treillage 18 est de préférence un filtre en treillage 18 plastique. Par ailleurs, la machine 1 comprend un réservoir tampon 19, servant de détente, disposé en amont du filtre en treillage 18 et configuré pour récupérer des gouttelettes de solution lessivielle, notamment par retombée des gouttelettes lors de variations de vitesse de l'air dans le réservoir tampon 19, et linéariser le débit de l'air aspiré le traversant. De préférence, le filtre en treillage 18 est disposé directement en sortie du réservoir tampon 19. Selon le mode de réalisation représenté sur la Figure 1, le réservoir tampon 19 a une forme de pavé droit d'un volume de 1 m3, mais pourrait avoir une autre forme, par exemple une forme cylindrique, ou un autre volume. L'air aspiré par le premier ventilateur 15d de la pompe à chaleur 15 est introduit dans le réservoir tampon 19 par une surface supérieure, à une première extrémité, circule ensuite dans le réservoir tampon 19, puis est extrait, par aspiration du premier ventilateur 15d, à une seconde extrémité du réservoir tampon 19, opposée à la première extrémité. De préférence, une hauteur à laquelle l'air est aspiré dans le réservoir tampon 19 est inférieure à une hauteur à laquelle l'air est introduit dans le réservoir tampon 19. De préférence encore, l'air est aspiré dans le réservoir tampon 19 à travers un tube dont une extrémité distale forme un biseau, par exemple de 45°, orienté vers le point d'entrée de l'air, de telle sorte que l'air circulant dans le réservoir tampon 19 est davantage freiné entre le point d'entrée et le point de sortie. On entend par linéarisation du débit de l'air aspiré une réduction et une homogénéisation de la vitesse de l'air aspiré, c'est-à-dire que les variations de vitesse d'air en sortie sont plus faibles qu'en entrée, et une réduction de la quantité de vapeur de solution lessivielle aspirée.

On comprendra que le réservoir tampon 19 est configuré pour être régulièrement vidé de la solution lessivielle récupérée par le filtre en treillage 18 et le réservoir tampon 19, par exemple manuellement, dans le réservoir de solution lessivielle 12. On comprendra aussi qu'en variante, la machine 1 peut en outre comprendre une conduite de drainage configurée pour évacuer la solution lessivielle récupérée jusqu'au réservoir de solution lessivielle 12, la conduite de drainage reliant par exemple un fond du réservoir tampon 19 à la partie supérieure du réservoir de solution lessivielle 12.

Selon une variante non préférée, le filtre en treillage 18 peut être utilisé en combinaison du volume libre 12i. Selon cette variante, le filtre en treillage 18 est placé directement en sortie du réservoir de solution lessivielle 12, de telle sorte que le volume libre 12i joue alors le rôle d'un réservoir tampon.

On comprendra que les solutions techniques indiquées ci-avant permettent de récupérer de la solution lessivielle et donc de diminuer la consommation en solution lessivielle de la machine 1, mais aussi de diminuer une quantité de vapeur, contenue dans l'air aspiré, libérée dans l'environnement immédiat de la machine 1. On comprendra aussi que la réduction de consommation de solution lessivielle permet également de réduire la consommation énergétique de la machine de lavage 1, puisque la quantité évaporée est moindre, ce qui permet de réduire la quantité de chaleur nécessaire à l'évaporation.

On comprendra que, de préférence, l'évaporateur 15b de la pompe à chaleur 15, le filtre en treillage 18 et le réservoir tampon 19 sont configurés et dimensionnés de telle sorte que toute la vapeur de solution lessivielle contenue dans l'air aspiré dans la pompe à chaleur 15 est condensée et récupérée, de telle sorte que l'air ayant été aspiré dans la pompe à chaleur 15 peut être libéré dans l'environnement immédiat de la machine de lavage 1 sans charger l'air de l'environnement immédiat de la machine 1 en vapeur de solution lessivielle. Dans le cas où la solution lessivielle est une solution de lavage ou une solution détergente, la sortie d'air 154 et l'entrée/sortie d'air 153 de la pompe à chaleur 15 peuvent comprendre des filtres configurés pour piéger d'éventuels composés nocifs aéroportés provenant de la solution lessivielle avant de rejeter l'air dans l'environnement immédiat de la machine 1.

Dans le mode de réalisation représenté sur la Figure 1, la machine de lavage 1 est en outre configurée pour permettre un séchage de la pièce P. En particulier, la machine 1 comprend en outre une vanne de commande d'alimentation en solution lessivielle 20 disposée entre la pompe 13 et la rampe de pulvérisation 11a, et un système d'alimentation en fluide de soufflage 22 raccordé de manière fluidique à la rampe de pulvérisation 11a par l'intermédiaire d'une vanne de commande d'alimentation en fluide de soufflage 21. La rampe de pulvérisation 11a est en outre configurée pour pulvériser alternativement de la solution lessivielle et du fluide de soufflage en étant alternativement reliée au réservoir de solution lessivielle 12 et au système d'alimentation en fluide de soufflage 22, et le dispositif de commande 16 est configuré pour commander les vannes de commande d'alimentation 20, 21 pour commander l'alimentation de la rampe de pulvérisation 11a en solution lessivielle et en fluide de soufflage. Le fluide de soufflage peut, par exemple, être de l'air et le système d'alimentation en fluide de soufflage 22 peut, par exemple, être un système d'alimentation en air comprimé ou un système d'alimentation en air comprimé pulsé. On comprendra que, lors d'une alimentation de la rampe de pulvérisation 11a en fluide de soufflage, des pressions variables de fluide de soufflage peuvent être utilisées. En variante, la rampe de pulvérisation 11a peut être alimentée en air de soufflage par un ventilateur, ou la machine de lavage 1 peut en outre comprendre une seconde rampe de soufflage alimentée en air de soufflage par un ventilateur.

On va maintenant décrire succinctement un procédé de fonctionnement d'une machine de lavage 1 selon le mode de réalisation représenté sur la Figure 1.

Le procédé comprend une étape a) consistant à actionner la pompe 13 pour faire circuler de la solution lessivielle dans la conduite de chauffage 14, à actionner le premier ventilateur 15d de la pompe à chaleur 15 à une première vitesse (par exemple de 60 Hz) pour aspirer de l'air depuis l'environnement immédiat de la machine de lavage 1 et faire circuler ledit air au contact de l'évaporateur 15b, à mesurer une température de la solution lessivielle à l'aide du capteur de température 12c dans le réservoir de solution lessivielle 12, et à actionner la pompe à chaleur 15 pour chauffer la solution lessivielle jusqu'à une première température cible (par exemple une température comprise entre 55 et 60 °C), de manière à amorcer la machine de lavage 1.

Le procédé comprend ensuite une étape b) consistant à actionner la pompe 13 pour alimenter la rampe de pulvérisation 11a en solution lessivielle et pour faire circuler de la solution lessivielle dans la conduite de chauffage 14, à actionner la pompe à chaleur 15 pour chauffer la solution lessivielle, à actionner le premier ventilateur 15d à une seconde vitesse (par exemple de 30 Hz ou de 60 Hz), inférieure ou égale à la première vitesse, pour aspirer de l'air depuis l'environnement immédiat de la machine de lavage 1 et faire circuler ledit air au contact de l'évaporateur 15b, et à actionner le second ventilateur 15g (par exemple à 30 Hz) pour aspirer à la fois de l'air sortant de l'évaporateur 15b et de l'air provenant de l'environnement immédiat de la machine de lavage 1 et faire circuler ledit air au contact du condenseur à air 15e.

Le procédé comprend ensuite une étape c) consistant à actionner la pompe 13 pour faire circuler de la solution lessivielle dans la conduite de chauffage 14, à arrêter l'alimentation de la rampe de pulvérisation 11a en solution lessivielle, à actionner le système d'alimentation en fluide de soufflage 22 pour alimenter la rampe de pulvérisation 11a en fluide de soufflage, à actionner la pompe à chaleur 15 pour chauffer la solution lessivielle, à actionner le premier ventilateur 15d à la seconde vitesse (par exemple de 30 Hz ou de 60 Hz) pour aspirer de l'air provenant de la chambre de lavage 11 et faire circuler ledit air au contact de l'évaporateur 15b, et à actionner le second ventilateur 15g (par exemple à 30 Hz) pour aspirer à la fois de l'air sortant de l'évaporateur 15b et de l'air provenant de l'environnement immédiat de la machine de lavage 1 et faire circuler ledit air au contact du condenseur à air 15e.

Le procédé comprend ensuite une étape d) consistant à mesurer la température de la solution lessivielle à l'aide du capteur de température 12c dans le réservoir de solution lessivielle 12.

Le procédé comprend ensuite une étape e) consistant, si la température de la solution lessivielle est supérieure à une seconde température cible (par exemple comprise entre 60 et 65 °C), à augmenter une vitesse de fonctionnement du second ventilateur (par exemple à 60 Hz), la seconde température cible étant supérieure ou égale à la première température cible.

On comprendra que le dispositif de commande 16 est configuré pour commander la machine 1 de manière à exécuter le procédé.

On comprendra également que l'étape a) correspond à une étape d'amorçage de la machine de lavage 1, que l'étape b) correspond à une étape de lavage d'une pièce P, que l'étape c) correspond à une étape de séchage de la pièce P, et que les étapes d) et e) correspondent à des étapes de surveillance et d'ajustement de température. On comprendra donc que, pour un fonctionnement en série, l'étape a) peut être réalisée une seule fois et qu'une pluralité de pièces (éventuellement une pluralité de groupes de pièces) peuvent être successivement introduites dans la machine de lavage, les étapes b) à e) étant réalisées pour chaque pièce P (le cas échéant, chaque groupe de pièces) introduite dans la machine 1. On comprendra aussi que, selon une variante non préférée, l'étape d'amorçage peut utiliser le moyen de chauffage auxiliaire 17, en combinaison ou en remplacement de la pompe à chaleur 15, pour chauffer la solution lessivielle jusqu'à la première température cible.

Si l'on se réfère maintenant à la Figure 3, on peut voir que l'on y a représenté une machine de lavage 1 selon un deuxième mode de réalisation de l'invention, les éléments ayant la même fonction que dans le premier mode de réalisation sont indiqués par le même chiffre de référence.

Le deuxième mode de réalisation diffère du premier mode de réalisation uniquement par le fait que, dans le deuxième mode de réalisation, l'évaporateur 15b est configuré pour récupérer indirectement de la chaleur provenant d'un air réchauffé dans la chambre de lavage 11.

Pour cela, la machine de lavage 1 comprend une boucle de circulation de fluide caloporteur additionnelle 23, un échangeur de chaleur 24 et une canalisation 11f configurée pour raccorder de manière fluidique l'échangeur de chaleur 24 à l'intérieur de la chambre de lavage 11. La canalisation 11f est, de préférence, raccordée à une partie supérieure de la chambre de lavage 11.

L'échangeur de chaleur 24 est configuré pour aspirer de l'air depuis la canalisation 11f, pour récupérer de la chaleur à partir dudit air aspiré et pour transférer de la chaleur récupérée au fluide caloporteur de la boucle de circulation de fluide caloporteur additionnelle 23. De plus, la boucle de circulation de fluide caloporteur additionnelle 23 est agencée, au niveau de la pompe à chaleur 15, pour transférer de la chaleur du fluide caloporteur de la boucle de circulation de fluide caloporteur additionnelle 23 à l'évaporateur 15b de la pompe à chaleur 15.

Par ailleurs, on comprendra que, selon des variantes du deuxième mode de réalisation, la machine 1 peut comprendre, en remplacement ou en complément de la canalisation 11f, un volume libre agencé dans le réservoir de solution lessivielle 12, au-dessus de la solution lessivielle, configuré pour recevoir de l'air provenant de la chambre de lavage 11. On comprendra que l'échangeur de chaleur 24 est alors configuré pour aspirer de l'air depuis ledit volume libre, en remplacement ou en complément de l'aspiration depuis la canalisation 11f décrite ci-avant. Par exemple, ledit volume libre pourrait être agencé dans le réservoir de solution lessivielle 12 d'une manière analogue au volume libre 12i du premier mode de réalisation décrit ci-avant.

On comprendra aussi que, dans le deuxième mode de réalisation, c'est l'échangeur de chaleur 24 qui comprend la conduite de drainage 15h configurée pour récupérer de la vapeur de solution lessivielle contenue dans l'air aspiré et se condensant au niveau de l'échangeur de chaleur 24, et évacuer la vapeur condensée récupérée vers le réservoir de solution lessivielle 12.

On comprendra également que, de préférence, de manière analogue à ce qui a été décrit pour le premier mode de réalisation, dans le deuxième mode de réalisation, l'échangeur de chaleur 24 est configuré pour aspirer de manière sélective de l'air depuis l'environnement immédiat de la machine de lavage 1, de manière à récupérer de la chaleur à partir dudit air aspiré. On comprendra aussi que la machine 1 peut comprendre un filtre en treillage 18, servant de dévésiculeur, disposé en amont de l'échangeur de chaleur 24, le filtre en treillage 18 étant en outre configuré pour linéariser le débit de l'air aspiré le traversant, et la machine 1 peut comprendre un réservoir tampon 19, servant de détente, disposé en amont du filtre en treillage 18 et configuré pour récupérer des gouttelettes de solution lessivielle et linéariser le débit de l'air aspiré le traversant.

On comprendra que, dans ce cas, l'échangeur de chaleur 24, le filtre en treillage 18 et le réservoir tampon 19 sont, de préférence, configurés et dimensionnés de telle sorte que toute la vapeur de solution lessivielle contenue dans l'air aspiré dans l'échangeur de chaleur 24 est condensée et récupérée, de telle sorte que l'air ayant été aspiré dans l'échangeur de chaleur 24 peut être libéré dans l'environnement immédiat de la machine de lavage 1 sans charger l'air de l'environnement immédiat de la machine 1 en vapeur de solution lessivielle. On comprendra aussi que dans le cas où la solution lessivielle est une solution de lavage ou une solution détergente, la sortie d'air de l'échangeur de chaleur 24 peut comprendre des filtres configurés pour piéger d'éventuels composés nocifs aéroportés provenant de la solution lessivielle avant de rejeter l'air dans l'environnement immédiat de la machine 1.

L'invention concerne également une ligne de production industrielle comprenant une ou plusieurs machines de lavage 1 selon l'invention configurées pour recevoir séquentiellement, avec des cycles de lavage inférieurs à 5 minutes, une pluralité de pièces P à laver et un ou plusieurs dispositifs de transport configurés pour transporter la pluralité de pièces P à laver et introduire séquentiellement la pluralité de pièces P à laver dans la ou les machines de lavage 1. Un dispositif de transport peut par exemple comprendre une courroie transporteuse, un plateau rotatif ou un bras robotique.

On comprendra qu'une machine de lavage 1 selon l'invention peut, par exemple, être une machine de lavage configurée pour laver des pièces P sortant d'usinage, ou tout autre machine de lavage 1 utilisant une solution lessivielle chauffée. Une machine de lavage 1 selon l'invention est en outre particulièrement adaptée pour réaliser des cycles de lavage compris entre 3 et 5 minutes.

Il est bien entendu que les modes de réalisation particuliers qui viennent d'être décrits ont été donné à titre indicatif et non limitatif, et que des modifications peuvent être apportées sans que l'on s'écarte pour autant du cadre de la présente invention.

## Revendications

1. - Machine de lavage (1) comprenant :
- une chambre de lavage (11), configurée pour recevoir une pièce à laver (P) ;
- un réservoir de solution lessivielle (12), configuré pour contenir une solution lessivielle ;
- une rampe de pulvérisation (11a), disposée dans la chambre de lavage (11) et configurée pour pulvériser de la solution lessivielle sur la pièce à laver (P) ;
- une pompe (13) configurée pour pomper de la solution lessivielle dans le réservoir de solution lessivielle (12) et envoyer ladite solution lessivielle jusqu'à la rampe de pulvérisation (11a) ; et
- un plateau de récupération (11c) placé, en utilisation, à une partie inférieure de la chambre de lavage (11), le plateau de récupération (11c) étant configuré pour récupérer de la solution lessivielle ayant été pulvérisée par la rampe de pulvérisation (11a) et comprenant une sortie de fluide (11d) raccordée de manière fluidique à une partie supérieure du réservoir de solution lessivielle (12) ;
- une conduite de chauffage (14) configurée pour être alimentée en solution lessivielle par la pompe (13) et agencée pour renvoyer ladite solution lessivielle dans le réservoir de solution lessivielle (12) ;
- une pompe à chaleur (15) configurée pour chauffer la solution lessivielle, la pompe à chaleur (15) comprenant une boucle de circulation de fluide caloporteur (15a) sur laquelle sont disposés un évaporateur (15b) et un condenseur (15c), l'évaporateur (15b) étant configuré pour récupérer de la chaleur provenant d'un air réchauffé dans la chambre de lavage (11) et pour transférer de la chaleur récupérée au fluide caloporteur de la boucle de circulation de fluide caloporteur (15a), et le condenseur (15c) étant configuré pour transmettre de la chaleur du fluide caloporteur de la boucle de circulation de fluide caloporteur (15a) à la solution lessivielle circulant dans la conduite de chauffage (14), pour chauffer ladite solution lessivielle ; et
- un dispositif de commande (16) configuré pour commander la pompe (13) et la pompe à chaleur (15)
**caractérisée par le fait que** la machine de lavage (1) comprend en outre l'un parmi :
- un premier ventilateur (15d) configuré pour aspirer de manière sélective de l'air depuis un environnement immédiat de la machine de lavage (1) et pour faire circuler ledit air aspiré au contact de l'évaporateur (15b) pour récupérer de la chaleur à partir dudit air aspiré, la pompe à chaleur (15) étant une pompe à chaleur (15) de type air-eau et comprenant ledit premier ventilateur (15d) ; et
- un échangeur de chaleur (24) configuré pour aspirer de manière sélective de l'air depuis un environnement immédiat de la machine de lavage (1) pour récupérer de la chaleur à partir dudit air aspiré et pour transférer de la chaleur récupérée à un fluide caloporteur d'une boucle de circulation de fluide caloporteur additionnelle (23) de la machine (1), la boucle de circulation de fluide caloporteur additionnelle (23) étant agencée, au niveau de la pompe à chaleur (15), pour transférer de la chaleur du fluide caloporteur de la boucle de circulation de fluide caloporteur additionnelle (23) à l'évaporateur (15b) de la pompe à chaleur (15).

2. - Machine (1) selon la revendication 1 lorsqu'elle comprend la boucle de circulation de fluide caloporteur additionnelle (23) et l'échangeur de chaleur (24), **caractérisée par le fait que** :
la machine (1) comprend en outre au moins l'un parmi une canalisation (11f) configurée pour raccorder de manière fluidique l'échangeur de chaleur (24) à un intérieur de la chambre de lavage (11), et un volume libre (12i) agencé dans le réservoir de solution lessivielle (12), au-dessus de la solution lessivielle, configuré pour recevoir de l'air provenant de la chambre de lavage (11) ; et
l'échangeur de chaleur (24) est en outre configuré pour aspirer de l'air depuis l'au moins un parmi ladite canalisation (11f) et ledit volume libre (12i), pour récupérer de la chaleur à partir dudit air aspiré et pour transférer de la chaleur récupérée au fluide caloporteur de la boucle de circulation de fluide caloporteur additionnelle (23).

3. - Machine (1) selon la revendication 1 lorsque la pompe à chaleur (15) est de type air-eau et comprend le premier ventilateur (15d), **caractérisée par le fait que** :
la machine (1) comprend en outre au moins l'un parmi une canalisation (11f) configurée pour raccorder de manière fluidique l'évaporateur (15b) de la pompe à chaleur (15) à un intérieur de la chambre de lavage (11), et un volume libre (12i) agencé dans le réservoir de solution lessivielle (12), au-dessus de la solution lessivielle, configuré pour recevoir de l'air provenant de la chambre de lavage (11) ; et
le premier ventilateur (15d) est en outre configuré pour aspirer de l'air depuis l'au moins un parmi ladite canalisation (11f) et ledit volume libre (12i), et pour faire circuler ledit air aspiré au contact de l'évaporateur (15b) pour récupérer de la chaleur à partir dudit air aspiré.

4. - Machine (1) selon la revendication 2 ou la revendication 3, **caractérisée par le fait que** la pompe à chaleur (15), le cas échéant l'échangeur de chaleur (24), comprend en outre une conduite de drainage (15h) configurée pour récupérer de la vapeur de solution lessivielle contenue dans l'air aspiré et se condensant au niveau de l'évaporateur (15b) lors du passage de l'air aspiré au contact de l'évaporateur (15b), le cas échéant au niveau de l'échangeur de chaleur (24) lors du passage de l'air aspiré au contact de l'échangeur de chaleur (24), et évacuer la vapeur condensée récupérée vers le réservoir de solution lessivielle (12).

5. - Machine (1) selon l'une quelconque des revendications 2 à 4, **caractérisée par le fait que** la machine (1) comprend en outre un filtre en treillage (18), servant de dévésiculeur, disposé en amont de l'évaporateur (15b), le cas échéant en amont de l'échangeur de chaleur (24), le filtre en treillage (18) étant en outre configuré pour linéariser le débit de l'air aspiré le traversant.

6. - Machine (1) selon la revendication 5, **caractérisée par le fait que** la machine (1) comprend un réservoir tampon (19), servant de détente, disposé en amont du filtre en treillage (18) et configuré pour récupérer des gouttelettes de solution lessivielle et linéariser le débit de l'air aspiré le traversant.

7. - Machine (1) selon l'une quelconque des revendications 1 à 6, **caractérisée par le fait que** le plateau de récupération (11c) est mobile et la machine (1) comprend en outre un système mécanique (11e) configuré pour déplacer verticalement le plateau de récupération (11c) de manière à ouvrir et fermer hermétiquement la chambre de lavage (11).

8. - Machine (1) selon l'une quelconque des revendications 1 à 7, **caractérisée par le fait que**, pour assurer un fonctionnement dégradé, le réservoir de solution lessivielle (12) comprend un moyen de chauffage auxiliaire (17) de la solution lessivielle, de préférence une résistance électrique.

9. - Machine (1) selon l'une quelconque des revendications 1 à 8, **caractérisée par le fait que** la machine (1) comprend en outre une vanne de commande d'alimentation en solution lessivielle (20) disposée entre la pompe (13) et la rampe de pulvérisation (11a), et un système d'alimentation en fluide de soufflage (22) raccordé de manière fluidique à la rampe de pulvérisation (11a) par l'intermédiaire d'une vanne de commande d'alimentation en fluide de soufflage (21), la rampe de pulvérisation (11a) étant en outre configurée pour pulvériser alternativement de la solution lessivielle et du fluide de soufflage en étant alternativement reliée au réservoir de solution lessivielle (12) et au système d'alimentation en fluide de soufflage (22), et le dispositif de commande (16) étant configuré pour commander les vannes de commande d'alimentation (20, 21) pour commander l'alimentation de la rampe de pulvérisation (11a) en solution lessivielle et en fluide de soufflage.

10. - Machine (1) selon la revendication 3 ou l'une quelconque des revendications 4 à 9 prise en dépendance de la revendication 3, **caractérisée par le fait que** :
la pompe à chaleur (15) comprend en outre un condenseur à air (15e) disposé sur la boucle de circulation de fluide caloporteur (15a), entre le condenseur (15c) et l'évaporateur (15b) et en amont d'un détendeur (15f) de la boucle de circulation de fluide caloporteur (15a), et un second ventilateur (15g) configuré pour aspirer au moins l'un parmi de l'air sortant de l'évaporateur (15b) et de l'air provenant d'un environnement immédiat de la machine de lavage (1) et pour faire circuler ledit air aspiré au contact du condenseur à air (15e).

11. - Procédé de fonctionnement d'une machine (1) selon la revendication 10 prise en dépendance de la revendication 9, **caractérisé par le fait que** le procédé comprend les étapes consistant à :
a) actionner la pompe (13) pour faire circuler de la solution lessivielle dans la conduite de chauffage (14), actionner le premier ventilateur (15d) de la pompe à chaleur (15) à une première vitesse pour aspirer de l'air depuis un environnement immédiat de la machine de lavage (1) et faire circuler ledit air au contact de l'évaporateur (15b), mesurer une température de la solution lessivielle à l'aide d'un capteur de température (12c) dans le réservoir de solution lessivielle (12), et actionner la pompe à chaleur (15) pour chauffer la solution lessivielle jusqu'à une première température cible, de manière à amorcer la machine de lavage (1) ;
b) actionner la pompe (13) pour alimenter la rampe de pulvérisation (11a) en solution lessivielle et pour faire circuler de la solution lessivielle dans la conduite de chauffage (14), actionner la pompe à chaleur (15) pour chauffer la solution lessivielle, actionner le premier ventilateur (15d) à une seconde vitesse, inférieure ou égale à la première vitesse, pour aspirer de l'air depuis l'environnement immédiat de la machine de lavage (1) et faire circuler ledit air au contact de l'évaporateur (15b), et actionner le second ventilateur (15g) pour aspirer à la fois de l'air sortant de l'évaporateur (15b) et de l'air provenant de l'environnement immédiat de la machine de lavage (1) et faire circuler ledit air au contact du condenseur à air (15e) ;
c) actionner la pompe (13) pour faire circuler de la solution lessivielle dans la conduite de chauffage (14), arrêter l'alimentation de la rampe de pulvérisation (11a) en solution lessivielle, actionner le système d'alimentation en fluide de soufflage (22) pour alimenter la rampe de pulvérisation (11a) en fluide de soufflage, actionner la pompe à chaleur (15) pour chauffer la solution lessivielle, actionner le premier ventilateur (15d) à la seconde vitesse pour aspirer de l'air provenant de la chambre de lavage (11) et faire circuler ledit air au contact de l'évaporateur (15b), et actionner le second ventilateur (15g) pour aspirer à la fois de l'air sortant de l'évaporateur (15b) et de l'air provenant de l'environnement immédiat de la machine de lavage (1) et faire circuler ledit air au contact du condenseur à air (15e) ;
d) mesurer la température de la solution lessivielle à l'aide du capteur de température (12c) dans le réservoir de solution lessivielle (12) ; et
e) si la température de la solution lessivielle est supérieure à une seconde température cible, augmenter une vitesse de fonctionnement du second ventilateur (15g), la seconde température cible étant supérieure ou égale à la première température cible.

12. - Ligne de production industrielle, **caractérisée par le fait que** la ligne de production industrielle comprend au moins une machine de lavage (1) selon l'une quelconque des revendications 1 à 10 configurée pour recevoir séquentiellement, avec des cycles de lavage inférieurs à 5 minutes, une pluralité de pièces (P) à laver et au moins un dispositif de transport configuré pour transporter la pluralité de pièces (P) à laver et introduire séquentiellement la pluralité de pièces (P) à laver dans l'au moins une machine de lavage (1).
